# EUROPEAN PATENT SPECIFICATION

(11) **EP 3 214 567 B1**
(45) Date of publication and mention of the grant of the patent: **19.02.2020**
(21) Application number: 16464004.7
(22) Date of filing: 01.03.2016
(51) Int. Cl.: G09C 1/00, G06F 21/75, G06F 21/57, H04L 9/00, H04L 9/32, G06F 7/76

(54) **SECURE EXTERNAL UPDATE OF MEMORY CONTENT FOR A CERTAIN SYSTEM ON CHIP**
SICHERE EXTERNE AKTUALISIERUNG VON SPEICHERINHALT FÜR EIN BESTIMMTES SYSTEM AUF EINEM CHIP
MISE À JOUR SÉCURISÉE DE CONTENU DE MÉMOIRE EXTERNE POUR UN CERTAIN SYSTÈME SUR PUCE

(43) Date of publication of application: 06.09.2017
(73) Proprietor: Siemens Aktiengesellschaft, 80333 München (DE)
(72) Inventor: Tudorancea, Marius-Virgiliu, 500419 Brasov (RO)
(74) Representative: Maier, Daniel Oliver

(56) References cited:
- US-A- 5 231 668
- US-A1- 2009 064 125
- US-A1- 2014 365 779
- US-B2- 8 812 855

## Description

### FIELD OF THE INVENTION

The present invention relates to a method for secure external update of memory content for a system on chip. More specifically, the method can be used to make a secure firmware update for custom digital circuits (e.g. ASIC) implemented as system on chip, especially for embedded systems.

### STATE OF THE ART

A system on chip (SoC) is an integrated circuit (IC) that integrates all components of a computer or other electronic system into a single chip. It may contain digital, analog, mixed-signal, and often radio-frequency functions, all on a single chip substrate. A typical application of SoCs is in the area of embedded systems. An embedded system is a computer system with a dedicated function within a larger mechanical or electrical system, often with real-time computing constraints.

SoCs can be implemented as an application-specific integrated circuit (ASIC) or using a field-programmable gate array (FPGA). A field-programmable gate array (FPGA) is an integrated circuit designed to be configured by a customer or a designer after manufacturing. The FPGA configuration is generally specified using a hardware description language (HDL), similar to that used for an application-specific integrated circuit (ASIC).

Existing solutions for secure external update of memory content range between pure software or hardware or a mixture thereof. The solutions often rely on storage (secure or non-secure, on- or off-chip) for storing secret information (e.g. cryptographic keys). Also they mostly rely on classic cryptography and complex system architectures in order to meet the required security level.

One existing solution is memory partitioning. The target's memory is partitioned in order to separate a newly received firmware file from the rest of the system, see e.g. "Safe and Secure Firmware Upgrade for AT91SAM Microcontrollers" of Sept 2006 by Atmel Corporation. Memory partitioning requires large amounts of memory and is based on pure software implementations of error detection and correction as well as cryptographic mechanisms. The main disadvantage is the software nature of this solution. Even more cryptographic keys are stored on-chip in a standard memory (preprogrammed). Common attacks such as SCA (Side Channel Attack) or reverse engineering can easily recover the encryption key thus compromising the security chain.

For the so called M-shield technology see "M-Shield Mobile Security Technology", Jerome Azema, Gilles Fayad, February 2008, Texas Instruments. This technology is a mixture of hardware and software which provides a highly secure environment for both firmware update and software execution. This solution requires a large infrastructure to hold the PKI-like system and dedicated on-chip hardware and software components.

Document US 2009/0064125 A1 discloses a method to securely update firmware in constrained memory e.g. security module before executing the update on the memory of the target device. Said method includes receiving, storing, preparing and sending a memory update to the constrained memory (e.g. security module) wherein the memory update data are divided into data blocks because of the limited memory of the used security module. The individual data blocks are separately downloaded and verified prior to sending them to the target device.

Document US 8 812 855 B2 describes a method for software protection which can be executed by a programmable circuit. Therefore, an instruction block is provided on the base of at least a portion of the program and a protective code is generated that has a predefined relationship with the instruction block. Free ranges are identified within the instruction block. These free ranges are used for embedding the protective code within the instruction block.

### SUMMARY OF THE INVENTION

One object of the present invention is to provide a method for secure external update of memory content for a certain system on chip with only a small or reduced infrastructure on-chip.

According to the present invention the method includes the following steps:
- the issuer of the update for the system on chip generates a first data signature by a generation process, the generation process using (at least) the data for update,
- the issuer of the update sends the data for update and the first data signature to the system on chip,
- the system on chip, upon receiving the data for update, generates a second data signature using the same generation process as for the first data signature, the generation process using the data for update,
- the system on chip compares first and second data signature and writes the data for update to the memory only if first and second data signature are identical,
   wherein the generation process for the first and second data signature comprises following steps:
   sending the data (D) for update to a data masking unit (D_M) for combining the data (D) for update with an output of a data counter which is sent to the data masking unit (D_M) ;
- feeding a resulting output of the data masking unit (D_M) to a bits combine function (B_C) which returns an output depending on the resulting output of the data masking unit (D_M) and an address (A) of the data (D) for update;
- encrypting the output of the bits combine function (B_C); and
- sending the encrypted output of the bits combine function (B_C) to a hash function (H_F).

In that both signature generating processes use the data for update for generating the data signature, every change in the data for update before saving the data in the memory of the system on chip will change the second data signature which is computed in the system on chip. In this case the writing of the data into the memory will be denied. Generating a data signature based on the data itself does not need much infrastructure.

One embodiment of the invention is that the generation process for the data signature comprises the step of counting the data for update with a data counter. The data counter counts the data cycles and can count any amount of data (e.g. bits, bytes, words, etc.). This avoids changes in the initial data access procedure, like out-of-order, length or number of write cycles (e.g. skipped or extra write cycles). So this embodiment prevents unauthorized preservation of original data from one update to another, as well as overwriting some memory locations or forcing the entire memory to be written. As an example, the memory can only be written continuously, without any "gaps".

The data counter can be set to a fixed value for the first counting cycle and can then be initialized with a value depending on the first memory location content, e.g. the location for the updated memory content, for example an updated software version. This will guarantee different data signatures for the same data, same address but different releases since the signatures for the whole data package will be different, even if only few bytes differ.

The data counter can for example be implemented as write cycle counter.

One embodiment of the invention is that the generation process for the data signature comprises a step of generating random numbers. The use of random numbers makes reverse engineering or DPA (Differential_Power Analysis) impossible. Also other attacks, like an attack on a following encryption step in the process of generating the data signature, will not correlate the signature with the data.

The random numbers can be generated by using the data counter for counting the data for update. However, any other process can be used for generating random numbers. One can use a true random number generator. One can use a pseudo-random number generator, seeded e.g. by the data or the dater counter. One can use hashing, etc.

Generating random numbers is one possibility of data masking. The object of data masking is to decorrelate the output (=the resulting data of the generation process) from the original data, that is, the data for update. This method prevents an attacker to do reverse engineering based attacks which could allow him to identify the original data payload. Data masking can be done in various ways, e.g. by a pseudo-random number generator, by hash functions, etc. The only constraint is to use a deterministic algorithm. One embodiment of data masking by a pseudo-random number generator as a seed is that the input for data masking is the output of the data counter and the data for update.

In a preferred embodiment of the invention the masked data undergoes a bits combine function which returns a value depending on the masked data and the address of the data for update. This function can be simple bit obfuscation or a non-linear function, depending of the resources and the desired security level to be achieved.

In order to make the data signature still more secure, the masked data (if there is no bits combine function) or the data after the bits combine function is encrypted with the unique device key of the said system on chip. The encryption key is known only by the authorized issuer of the update, e.g. the software issuer, and can easily be used by him for generating the first data signature.This key, however, is not stored inside the addressed device, i.e. the system on chip, instead the keyis generated inside the system on chip device based on a physically unclonable function (PUF).

A physical unclonable function (PUF) is a physical entity that is embodied in a physical structure and is easy to evaluate but hard to predict. A PUF is the hardware analog of a one-way function. PUFs are usually implemented in integrated circuits with high security requirements. PUFs depend on the uniqueness of their physical microstructure. This microstructure depends on random physical factors introduced during manufacturing. These factors are unpredictable and uncontrollable which makes it virtually impossible to duplicate or clone the structure.

Rather than embodying a single cryptographic key, PUFs implement challenge-response authentication to evaluate this microstructure. When a physical stimulus is applied to the structure, it reacts in an unpredictable (but repeatable) way due to the complex interaction of the stimulus with the physical microstructure of the device. The applied stimulus is called the challenge, and the reaction of the PUF is called the response. A specific challenge and its corresponding response together form a challenge-response pair. The device's identity is established by the properties of the microstructure itself. As this structure is not directly revealed by the challenge-response mechanism such a device is resistant to spoofing attacks.

Using a fuzzy extractor or key extractor PUFs can also be used to extract a unique strong cryptographic key from the physical microstructure. The same unique key is reconstructed every time the PUF is evaluated. The challenge-response mechanism is then implemented using cryptography. In many applications it is important that the output is stable. If the PUF is used for a key in cryptographic algorithms it is necessary that error correction will be done to correct any errors, caused by the underlying physical processes and reconstruct the exactsame key each time under all operating conditions.

A physicalunclonable function (PUF) establishes a data string which depends upon partially random physical characteristics of the physically unclonable function. The contents of a PUF cannot be predetermined, and PUF responses are somewhat noisy. PUFs have proven to be advantageous alternatives for many forms of secure identification, including the storing of keys, identifiers and the like in secure memories.

The data string may depend on a stable state in which a configuration of components of the PUF settles upon the SoC's power-up. An example of a PUF is a volatile memory which shows a power-up contents which depends on the partially random physical characteristics of the memory. Manufacturing variations lead to different physical characteristics for different memories.

Using a PUF the need for secure memory to store a key is circumvented. A PUF furthermore provides natural protection against unauthorized attempts to obtain the cryptographic key through physical reverse engineering (also known as tampering), since damage inflicted on the PUF during the attempt would change the initial data string beyond repair.

Since the behavior of a PUF depends on small variations, a certain error percentage is unavoidable. An error correction procedure can be used to correct for these fluctuations, and make sure that the reliable data string is identical, each time it-is derived from the PUF. Using so-called helper data the initial data string is mapped to one or more error correctable data words. An error correctable data word is a data word which is close to a code word of an error correcting code. An error correctable data word may be seen as the sum of a code word and an error word. By applying an error correcting algorithm corresponding to the error correcting code, the error correctable data words are decoded into corrected and decoded data words.

PUF based security mechanisms are used to derive a device unique key, based on the intrinsic physical qualities of the silicone device itself. During enrolment phase the helper data is generated, based on the PUF response and the encryption key provided by the manufacturer of the SoC or of the software, respectively, and stored on-chip. During normal operation the PUF response is used together with the helper data to regenerate the key.

The PUF based regeneration or reconstruction mechanism can be implemented e.g. as Quiddikey®-Flex by Instrinsic ID. The encryption algorithm can be any of choice based on the desired security level to be achieved and the available physical resources.

Depending on the foregoing steps in generating the data signature, one embodiment of the invention is that masked data or the data after the bits combine function or the encrypted data undergoes a hash function and that the product of the hash function is the data signature. This one way function will guarantee that there is no possibility to compute back the original data and discover which elements are contributing to the signing process.

Of course, if there is no hash function at the end of the signature generation process, the data signature is the output of the cryptographic function. If there is also no encryption with a cryptographic function, the data signature may as well be the output of the bits combine function. And if there is also no bits combine function, the data signature may as well be the output of the data masking. Generally speaking, the last implemented step of any subgroup of these steps will output the data signature.

The present invention also comprises respective computer program code means which means is adapted to perform all the steps of the method according to the invention when the computer program is run on a computer for generating the first data signature. For generating the second data signature in the system on chip only hardware is used.

The present invention further comprises a system on chip for secure external update of memory content for this system, according to the method of the present invention. The system includes at least
- means configured to generate a second data signature using the data for update, upon receiving the data for update, the means comprising a data counter for counting the data for update and a random number generator using the results of the data counter,
- means configured to compare a first data signature, which has been sent to the system on chip by the issuer of the update, with the second data signature and to write the data for update to the memory only if first and second data signature are identical.

A favorable embodiment of the system on chip is that the means configured to generate a second data signature comprise a data masking unit, e.g. in form of a pseudo-random number generator or a hash or any other one way function, for combining the data for update and the output of the data counter.

Another favorable embodiment of the system on chip is that the means configured to generate a second data signature comprise a cryptographic module which is configured to encrypt the output of the data masking unit with the unique device key of the said system on chip, the means further comprising a key regenerator and a PUF device to reconstruct the encryption key.

### BRIEF DESCRIPTION OF FIGURES

The invention will be explained in closer detail by reference to a preferred embodiment, which is depicted schematically in the figures.
- Fig. 1.: shows a possible structure for signature generation and signature regeneration according to the invention,
- Fig. 2: shows a flow diagram of the signature generation according to the invention,
- Fig. 3: shows a flow diagram of the signature regeneration according to the invention.

### WAYS TO IMPLEMENT THE INVENTION

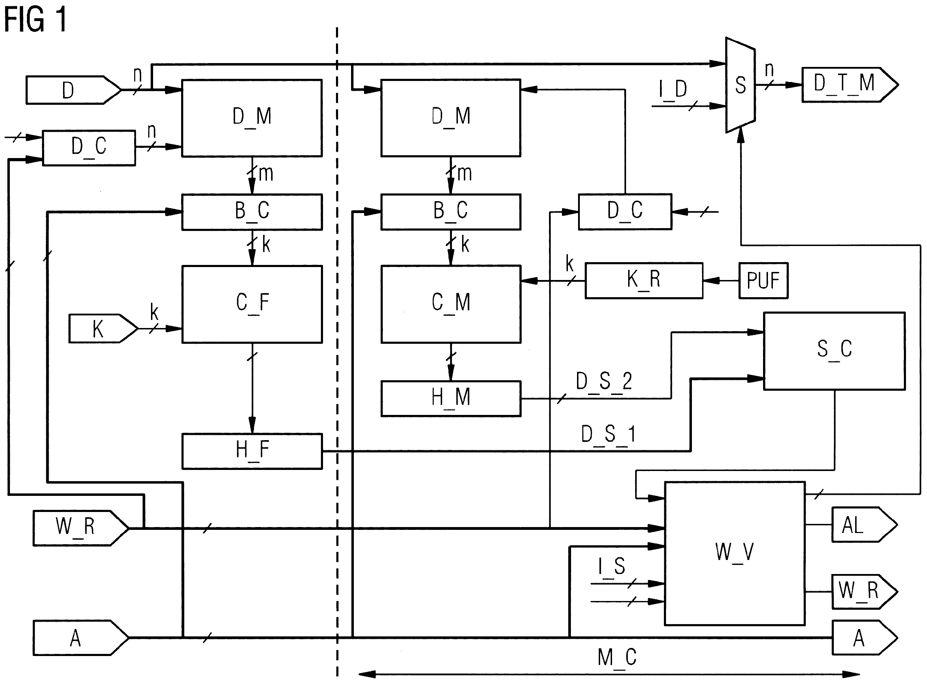

The proposed solution involves two distinct components, a graphic view of the concept is depicted in Fig. 1: one component for the generation of data signature, which is done by the (software) update issuer, and one component for the update of the memory content, which is done on-chip by the software update receiver, i.e. the system on chip, more precisely the memory controller of the system on chip. Fig. 1 on the left of the dotted line shows a possible structure for generating a first data signature D_S_1 by the manufacturer of the system on chip or the issuer of the update, especially the issuer of a software update for the system on chip. Fig. 1 on the right of the dotted line shows a possible structure for a system on chip for generating a second data signature D_S_2, i.e. for regeneration of the data signature computed by the manufacturer or issuer of the update.

The data D for update is also called data payload and is the actual memory content to be written into the memory, e.g. a software update. The data D for update consists of data, addresses and the data signature, similar to the Intel HEX format. The data D for update may or may not be encrypted but the mechanism of signing and updating the memory content will allow only the correct data to be written. In other words the proposed solution resolves the problem of unauthorized memory updates. An attacker might get the new memory content (e.g. a software update), plain text or not, but he will not be able to issue an un-authorized memory update, e.g. provide a fake software update in order to take control of the system on chip device. For a higher security level it is recommended to encrypt the memory content.

The proposed mechanism does not allow writing to the device memory in any other sequence than the sequence in which the data D was originally signed. In this way, any extra write requests, even with an apparent correct signature D_S_1, D_S_2, are rejected (e.g. spying on data and trying to write multiple times for memory aging attacks or locking/unlocking memory registers).

So for generating the first data signature D_S_1 see Fig. 1 on the left of the dotted line, the data D for update is sent as seed to the data masking unit D_M which can be implemented as software or hardware. A data counter D_C sends his output (i.e. the number of iterations, here the number of write requests W_R) also to the data masking unit D_M which acts as a pseudo-random number generator for combining the data D for update and the output of the data counter D_C. The resulting. random number is fed to a bits combine function B_C which sends its output as data input to a cryptographic function C_F. The cryptographic function C_F uses the unique device key K of the system on chip (whose memory shall be updated) to encrypt the output of the bits combine function B_C. The encrypted data is then sent to a hash function H_F which once more amends the data. The output of the hash function H_F is the first data signature D_S_1 which is sent to the signature check module S_C situated in the system on chip.

The addresses A, which denominate the addresses where the data D shall be written and which are known to the issuer of the update, are sent to the bits combine function B_C for generating the first data signature D_S_1 and to the signature check module S_C for comparing. If the signature is validated by the signature check module S_G (see below for reconstruction of D_S_2), the write validation unit W_V enables writing to the SoC's memory. The write requests W_R by the issuer of the update are sent to the data counter D_C for generating the first data signature D_S_1, to the write validation unit W_V of the system on chip and to the data counter D_C of the system on chip for generating the second data signature D_S_2.

For generating the second data signature D_S_2 in the memory controller M_C on the system on chip, see Fig. 1 on the right of the dotted line, the data D for update sent from the issuer is also sent to a data masking unit D_M of the system on chip. This data masking unit D_M uses the same algorithm as the data masking unit D_M of the issuer (on the left of the dotted line) and is implemented as hardware, because software could be attacked or hacked. A data counter D_C (implemented in hardware), which works the same way as the data counter D_C of the issuer, sends his output (here the number of write requests W_R) to the data masking unit D_M of the system on chip, which data masking unit D_M therefore acts as a pseudo-random number generator for combining the data D for update and the output of the data counter D_C. The resulting random number is fed to a bits combine function B_C (implemented in hardware) which uses the same algorithm as the bits combine function B_C of the issuer and which sends its output as data input to a cryptographic module C_M. The cryptographic module C_M is implemented in hardware and uses the same algorithm as the cryptographic function C_F if the issuer. The cryptographic module C_M uses a regenerated unique device key of the system of chip, which key is regenerated by using a PUF device PUF and a key regenerator K_R (implemented in hardware), to encrypt the output of the bits combine function B_C. The encrypted data is then sent to a hash module H_M ( implemented in hardware) which once more amends the data and which uses the same algorithm as the hash function H_F of the issuer. The output of the hash module H_M is the second data signature D_S_2 which is sent to the signature check module S_C situated in the system on chip.

So inside the memory controller M_C, the data signature is re-computed in the same was as by the update issuer (e.g. the manufacturer). The re-computed data signature is compared with the one received by the issuer for each write request in the signature check module S_C (implemented in hardware) and, depending on the result of the comparison, the update is performed or not. That is, the signature check module S_C sends an OK to the write validation unit W_V (implemented in hardware) if first and second data signature D_S_1 D_S_2 are identical. The write validation unit W_V also receives internal signals I_S, enables writing of the update to the memory and issues an alarm if the data signatures are not identical. A selector S for selecting which data D_T_M is written into the memory also receives input in form of internal data I_D of the system on chip.

The following modules have the same functionality (and possibly implementation) on the issuer's side and on the system on chip's side:
- data masking unit D_M,
- data counter D_C,
- bits combine function B_C,
- cryptographic function C_F and cryptographic module C_M,
- hash function H_F and hash module H_M.

The following modules are available only on-chip and are used only by the memory update mechanism, in other words only in the memory: controller M_C for the purpose of generating the second data signature D_S_2. These modules are not available for any other purposes:
- PUF device PUF and key regenerator K_R: instead of storing the encryption key on-chip, the key is generated based on intrinsic properties of the silicon device. The key can be "programmed" in the device during the enrolment phase and will only be known by the owner of the device and/or by the issuer of the firmware/memory update. There is no possibility to read out the encryption key from the device of to reverse engineer it.
- signature check module S_C
- write validation unit W_V: this module issues the write enable commands to the memory controller (e.g. a DDR memory controller), based on the result of data signature check and the source of requests (internal or external). Various strategies could be enforced by rules, e.g. a restriction to use only some address spaces.

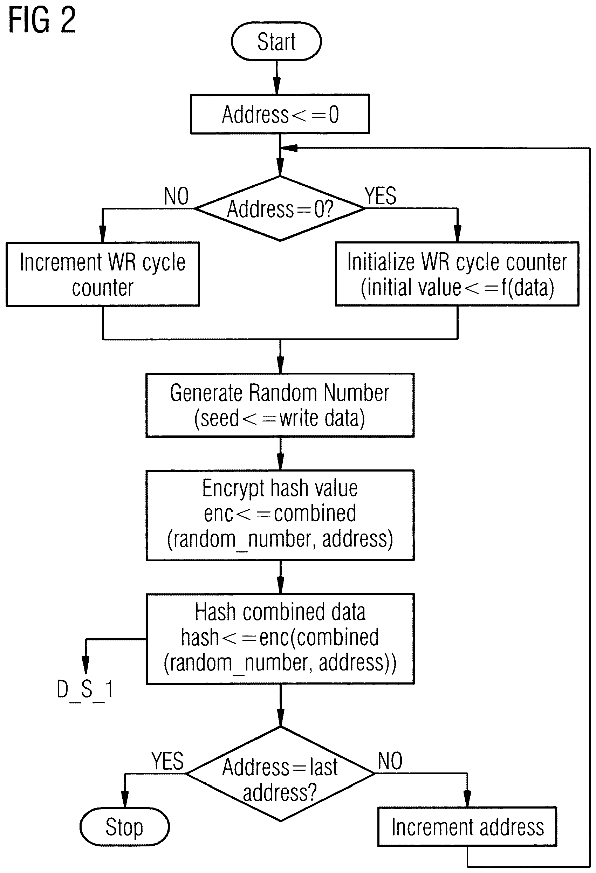

Fig. 2 shows a flow diagram of a possible signature generation according to the invention, that is, generation of the first data signature D_S_1 by the issuer. First the address A is set to zero when starting the procedure. Then the write cycle counter, for example D_C on the left in Fig. 1, is initialized and a hash or a random number is generated, e.g. by the data masking unit D_M of Fig. 1 on the left. The masked data (e.g. hash or random number) is further encrypted, e.g. by using the bits combine function B_C of Fig. 1 and the address, and optionally by using the unique device key of the system on chip. This combined data is hashed again, e.g. with the hash function H_F of Fig. 1, the result is the first data signature D_S_1. Then the address is incremented and the procedure starts again and ends when the last address has been reached.

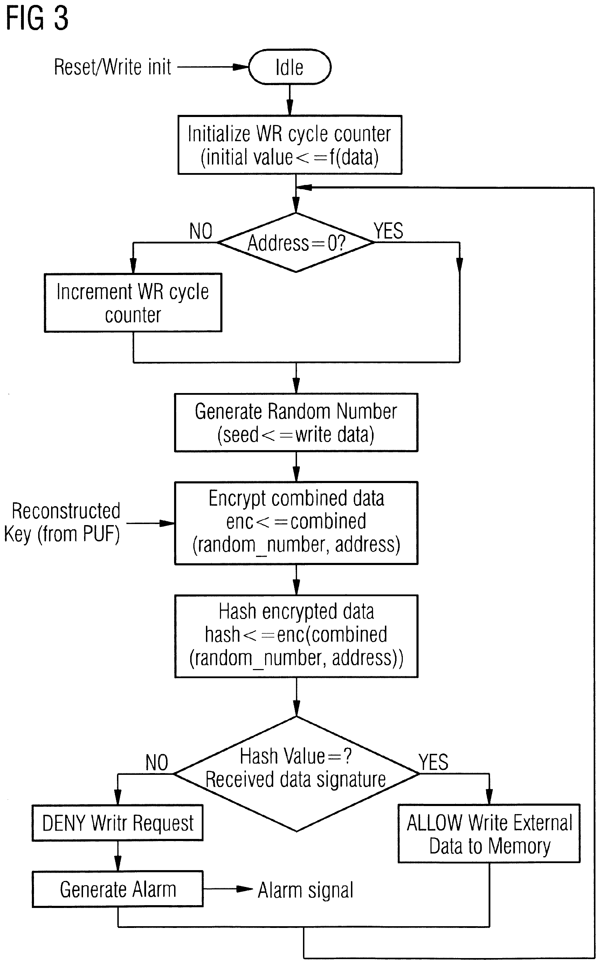

Fig. 3 shows a flow diagram of the signature regeneration according to the invention, that is, generation of the second data signature D_S_2 by the system on chip. First the write cycle counter is initialized, for example D_C in Fig. 1 on the right. Only if the address A is not zero, the write cycle counter is incremented and masked data, e.g. a hash or a random number, is generated, e.g. by the data masking unit D_M of Fig. 1 on the right. The masked data is further encrypted, e.g. by using the bits combine function B_C of Fig. 1 and the address, and optionally by using the reconstructed (=regenerated) device key of the system on chip. This combined data is hashed again, e.g. with the hash module H_M of Fig. 1, the resulting hash value is the second data signature D_S_2. Then the resulting hash value is compared with the data signature received from the issuer, see signature check module S_C in Fig. 1. If they are identical, the external data is written to the memory, the write cycle counter is incremented and the procedure starts again.

The main features of the described embodiment of the invention and their advantages can be described as follows : By using the PUF device the key is derived from the device's intrinsic features rather than store the key on-chip. Data masking uses a non-linear deterministic function which, together with the hash functions, prevents an attacker to execute reverse engineering or prevents brute force attacks on the actual data. The use of cryptographic primitives provides a unique data signature for each (system on chip) device. The data counter ensures that the correct write sequence is executed, that is, the correct order and the correct number. The hash function of the hash module provides a data diode, that is a unique bit sequence which characterizes the original data. If an attacker obtains the hash there is no possibility to compute the original data sequence.

The firmware update process is secured by means of hardware components which run fully independent of the software application. Rather than requiring a complex topology this method relies on lightweight dedicated hardware modules which enable the secure functionality. The core of the disclosed embodiment is computing the data signature using a combination of random numbers and a write cycle counter. The use of random numbers will make reverse engineering impossible, other attacks like Differential Power Analysis DPA on the encryption stage will not correlate the signature with the data. Additionally the encryption using a PUF derived key and hashing will prevent reverse engineering attacks.

Using the technical features of the invention, the firmware update is secured while the data payload (new software) is not necessarily changed. The data payload undergoes a signing procedure which ensures that each data sequence is monitored for changes, like changed data bits, shifted bits, removals or insertions. It is the object of the present invention to protect the data payload and not any individual components used to accomplish this, like the PUF device, an error correction mechanism, cryptographic primitives, etc. Each system on chip can be characterized individually by its unique key, derived from physical properties of the silicon device, and can be securely updated using a combination of cryptographic functions and simple security mechanisms.

The proposed concept is meant to solve the secure firmware update problem using data signatures, cryptographic functions and physically unclonable functions for custom digital circuits (e.g. ASIC). The same method can be extended to any external update of memory content.

### LIST OF REFERENCE SIGNS

- A: address
- B_C: bits combine function
- C_F: cryptographic function
- C_M: cryptographic module
- D: data for update
- D_C: data counter
- D_M: data masking unit
- D_S_1: first data signature
- D_S_2: second data signature
- D_T_M: data to memory
- H_F: hash function
- H_M: hash module
- I_D: internal data
- I_S: internal signals
- K: unique device key
- K_R: key regenerator
- M_C: memory controller
- PUF: PUF device
- S: selector
- S_C: signature check module
- W_R: write requests
- W_V: write validation unit

## Claims

1. Method for secure external update of memory content for a certain system on chip, the method comprising the following steps:
- the issuer of the update for the system on chip generates a first data signature (D_S_1) by a generation process, the generation process using the data (D) for update,
- the issuer of the update sends the data (D) for update and the first data signature (D_S_1) to the system on chip,
- the system on chip, upon receiving the data (D) for update, generates a second data signature (D_S_2) using the same generation process as for the first data signature (D_S_1), the generation process using the data (D) for update,
- the system on chip compares first and second data signature (D_S_1, D_S_2) and writes the data (D) for update to the memory only if first and second data signature (D_S_1, D_S_2) are identical;
wherein the generation process for the first and second data signature comprises following steps:
sending the data (D) for update to a data masking unit (D_M) for combining the data (D) for update with an output of a data counter which is sent to the data masking unit (D_M);
- feeding a resulting output of the data masking unit (D_M) to a bits combine function (B_C) which returns an output depending on the resulting output of the data masking unit (D_M) and an address (A) of the data (D) for update;
- encrypting the output of the bits combine function (B_C); and
- sending the encrypted output of the bits combine function (B_C) to a hash function (H_F).

2. Method according to claim 1, **characterized in that** a write cycle counter is used as data counter (D_C).

3. Method according to claims 1 to 2, **characterized in that** the data masking unit (D_M) is acting as a pseudo-random number generator by combining the data (D) for update and the output of the data counter (D_C).

4. Method according to one of claims 1 to 3, **characterized in that** for encrypting the output of the bits combine function (B_C) an unique device key (K) of the said system on chip is used.

5. Method according to claims 1 to 3, **characterized in that** encryption of the output of the bits combine function (B_C) in the system on chip is done with a reconstructed encryption key using a PUF of the system on chip.

6. Method according to one of claims 1 to 5, **characterized in that** the product of the hash function (H_F) is the first data signature (D_S_1) or the second data signature (D_S_2) .

7. Method according to one of claims 1 to 6 **characterized in that** an alarm is issued if the first and the second data signature are different.

8. System on chip for secure external update of memory content for this system on chip according to the method of one of the preceding claims, the system including at least:
- means configured to generate a second data signature (D_S_2) using the data (D) for update, upon receiving the data for update, using the same generation process as used for the generation of a first data signature (D_S_1) ;
- means configured to compare the first data signature (D_S_1), which has been sent to the system on chip by the issuer of the update, with the second data signature (D_S_2); and
- means to write the data (D) for update to the memory only if first and second data signature (D_S_1, D_S_2) are identical.

9. System on chip according to claim 8, **characterized in that** the means configured to generate a second data signature (D_S_2) comprise:
- a data counter;
- a data masking unit (D_M) for combining the data (D) for update and an output of the data counter (D_C);
- a bit combine function (B_C) for combining an output of the data masking unit (D_M) and an address of the data (D) for update;
- cryptographic module (C_M) providing a cryptographic function (C_F) for encrypting an output of the bits combine function (B_C); and
- a hash module (H_M) providing a hash function (H_F) for hashing encrypted output of the bits combine function (B_C) .

10. System on chip according to claim 8 or 9, **characterized in that** the means configured to generate a second data signature (D_S_2) comprise a cryptographic module (C_M) which is configured to encrypt the output of the data masking unit (D_M) with the unique device key of the said system on chip, the means further comprising a key regenerator (K_R) and a PUF device (PUF) to reconstruct the encryption key.

## Patentansprüche

1. Verfahren zur sicheren externen Aktualisierung von Speicherinhalt für ein bestimmtes System auf einem Chip, wobei das Verfahren die folgenden Schritte umfasst:
- der Herausgeber der Aktualisierung für das System auf einem Chip erzeugt eine erste Datensignatur (D_S_1) durch einen Generierungsprozess, wobei der Generierungsprozess die Daten (D) für die Aktualisierung verwendet,
- der Herausgeber der Aktualisierung sendet die Daten (D) für die Aktualisierung und die erste Datensignatur (D_S_1) an das System auf einem Chip,
- das System auf einem Chip generiert nach dem Empfangen der Daten (D) für die Aktualisierung eine zweite Datensignatur (D_S_2) unter Verwendung desselben Generierungsprozesses wie bei der ersten Datensignatur (D_S_1), wobei der Generierungsprozess die Daten (D) für die Aktualisierung verwendet,
- das System auf einem Chip vergleicht die erste und die zweite Datensignatur (D_S_1, D_S_2) und schreibt die Daten (D) für die Aktualisierung nur in den Speicher, wenn die erste und die zweite Datensignatur (D_S_1, D_S_2) identisch sind;
wobei der Generierungsprozess für die erste und die zweite Datensignatur folgende Schritte umfasst:
- Senden der Daten (D) für die Aktualisierung zu einer Datenmaskierungseinheit (D_M), um die Daten (D) für die Aktualisierung mit einer Ausgabe eines Datenzählers zu kombinieren, der an die Datenmaskierungseinheit (D_M) gesendet wird;
- Zuführen einer resultierenden Ausgabe der Datenmaskierungseinheit (D_M) an eine Bits-Kombinierfunktion (B_C), die je nach der resultierenden Ausgabe der Datenmaskierungseinheit (D_M) eine Ausgabe und eine Adresse (A) der Daten (D) für die Aktualisierung zurückschickt;
- Verschlüsseln der Ausgabe der Bits-Kombinierfunktion (B_C); und
- Senden der verschlüsselten Ausgabe der Bits-Kombinierfunktion (B_C) an eine Streuwertfunktion (Hash-Funktion) (H_F).

2. Verfahren nach Anspruch 1, **dadurch gekennzeichnet, dass** ein Schreibzykluszähler als Datenzähler (D_C) verwendet wird.

3. Verfahren nach Anspruch 1 bis 2, **dadurch gekennzeichnet, dass** die Datenmaskierungseinheit (D_M) als ein Pseudo-Zufallszahlengenerator fungiert, indem die Daten (D) für die Aktualisierung und die Ausgabe des Datenzählers (D_C) kombiniert werden.

4. Verfahren nach einem der Ansprüche 1 bis 3, **dadurch gekennzeichnet, dass** zum Verschlüsseln der Ausgabe der Bits-Kombinierfunktion (B_C) ein eindeutiger Geräteschlüssel (K) des genannten Systems auf einem Chip verwendet wird.

5. Verfahren nach einem der Ansprüche 1 bis 3, **dadurch gekennzeichnet, dass** das Verschlüsseln der Ausgabe der Bits-Kombinierfunktion (B_C) in dem System auf einem Chip mit einem rekonstruierten Kodierungsschlüssel unter Verwendung einer PUF (Physical Unclonable Function)-Vorrichtung des Systems auf einem Chip erfolgt.

6. Verfahren nach einem der Ansprüche 1 bis 5, **dadurch gekennzeichnet, dass** das Produkt der Hash-Funktion (H_F) die erste Datensignatur (D_S_1) oder die zweite Datensignatur (D_S_2) ist.

7. Verfahren nach einem der Ansprüche 1 bis 6, **dadurch gekennzeichnet, dass** ein Alarm ausgegeben wird, falls sich die erste und die zweite Datensignatur unterscheiden.

8. System auf einem Chip zur sicheren externen Aktualisierung von Speicherinhalt für dieses System auf einem Chip gemäß dem Verfahren eines der vorhergehenden Ansprüche, wobei das System mindestens umfasst:
- Mittel, dafür konfiguriert, nach dem Empfangen der Daten für die Aktualisierung eine zweite Datensignatur (D_S_2) unter Verwendung der Daten (D) für die Aktualisierung zu generieren, wobei derselbe Generierungsprozess wie für die Generierung einer ersten Datensignatur (D_S_1) verwendet wird;
- Mittel, dafür konfiguriert, die erste Datensignatur (D_S_1), die vom dem Herausgeber der Aktualisierung für das System auf einem Chip an das System gesendet wurde, mit der zweiten Datensignatur (D_S_2) zu vergleichen; und
- Mittel, um die Daten (D) für die Aktualisierung nur in den Speicher zu schreiben, wenn die erste und die zweite Datensignatur (D_S_1, D_S_2) identisch sind.

9. System auf einem Chip nach Anspruch 8, **dadurch gekennzeichnet, dass** die zum Generieren einer zweiten Datensignatur (D S 2) konfigurierten Mittel umfassen:
- einen Datenzähler,
- eine Datenmaskierungseinheit (D_M), um die Daten (D) für die Aktualisierung und eine Ausgabe des Datenzählers (D_C) zu kombinieren;
- eine Bit-Kombinierfunktion (B_C), um eine Ausgabe der Datenmaskierungseinheit (D_M) und eine Adresse der Daten (D) für die Aktualisierung zu kombinieren;
- ein kryptografisches Modul (C_M), das eine kryptografische Funktion (C_F) bereitstellt, um eine Ausgabe der Bits-Kombinierfunktion (B_C) zu verschlüsseln; und
- ein Hash-Modul (H_M), das eine Hash-Funktion (H_F) bereitstellt, um eine verschlüsselte Ausgabe der Bits-Kombinierfunktion (B_C) zu zerlegen.

10. System auf einem Chip nach Anspruch 8 oder 9, **dadurch gekennzeichnet, dass** die zum Generieren einer zweiten Datensignatur (D_S_2) konfigurierten Mittel ein kryptografisches Modul (C_M) umfassen, das dafür konfiguriert ist, die Ausgabe der Datenmaskierungseinheit (D_M) mit dem eindeutigen Geräteschlüssel des genannten Systems auf einem Chip verschlüsselt, wobei das Mittel weiterhin einen Schlüssel-Regenerator (K_R) und eine PUF-Vorrichtung (PUF) umfasst, um den Kodierungsschlüssel zu rekonstruieren.

## Revendications

1. Procédé pour la mise à jour externe sécurisée d'un contenu de mémoire pour un certain système sur puce, le procédé comprenant les étapes qui suivent :
- l'émetteur de la mise à jour pour le système sur puce génère une première signature de données (D_S_1) au moyen d'un processus de génération, le processus de génération utilisant les données (D) pour la mise à jour ;
- l'émetteur de la mise à jour envoie les données (D) pour la mise à jour et la première signature de données (D_S_1) au système sur puce ;
- le système sur puce, suite à la réception des données (D) pour la mise à jour, génère une seconde signature de données (D_S_2) en utilisant le même processus de génération que pour la première signature de données (D_S_1), le processus de génération utilisant les données (D) pour la mise à jour ;
- le système sur puce compare les première et seconde signatures de données (D_S_1, D_S_2) et écrit les données (D) pour la mise à jour dans la mémoire seulement si les première et seconde signatures de données (D_S_1, D_S_2) sont identiques ; dans lequel :
le processus de génération pour les première et seconde signatures de données comprend les étapes qui suivent :
- l'envoi des données (D) pour la mise à jour sur une unité de masquage de données (D_M) pour combiner les données (D) pour la mise à jour avec une sortie d'un compteur de données qui est envoyée sur l'unité de masquage de données (D_M) ;
- l'application d'une sortie résultante de l'unité de masquage de données (D_M) sur une fonction de combinaison de bits (B_C) qui retourne une sortie en fonction de la sortie résultante de l'unité de masquage de données (D_M) et d'une adresse (A) des données (D) pour la mise à jour ;
- le cryptage de la sortie de la fonction de combinaison de bits (B_C) ; et
- l'envoi de la sortie cryptée de la fonction de combinaison de bits (B_C) sur une fonction de hachage (H_F).

2. Procédé selon la revendication 1, **caractérisé en ce qu'**un compteur de cycles d'écriture est utilisé en tant que compteur de données (D_C).

3. Procédé selon les revendications 1 et 2, **caractérisé en ce que** l'unité de masquage de données (D_M) joue le rôle d'un générateur de nombres pseudo-aléatoires en combinant les données (D) pour la mise à jour et la sortie du compteur de données (D_C).

4. Procédé selon l'une des revendications 1 à 3, **caractérisé en ce que**, pour crypter la sortie de la fonction de combinaison de bits (B_C), une unique clé de dispositif (K) dudit système sur puce est utilisée.

5. Procédé selon les revendications 1 à 3, **caractérisé en ce que** le cryptage de la sortie de la fonction de combinaison de bits (B_C) dans le système sur puce est réalisé à l'aide d'une clé de cryptage reconstruite en utilisant un fichier à usage public PUF du système sur puce.

6. Procédé selon l'une des revendications 1 à 5, **caractérisé en ce que** le produit de la fonction de hachage (H_F) est la première signature de données (D_S_1) ou la seconde signature de données (D_S_2).

7. Procédé selon l'une des revendications 1 à 6, **caractérisé en ce qu'**une alarme est délivrée si les première et seconde signatures de données sont différentes.

8. Système sur puce pour la mise à jour externe sécurisée d'un contenu de mémoire pour ce système sur puce conformément au procédé selon l'une des revendications précédentes, le système incluant au moins :
- un moyen qui est configuré pour générer une seconde signature de données (D_S_2) en utilisant les données (D) pour la mise à jour, suite à la réception des données pour la mise à jour, en utilisant le même processus de génération que celui qui est utilisé pour la génération d'une première signature de données (D_S_1) ;
- un moyen qui est configuré pour comparer la première signature de données (D_S_1), qui a été envoyée au système sur puce par l'émetteur de la mise à jour, avec la seconde signature de données (D_S_2) ; et
- un moyen pour écrire les données (D) pour la mise à jour dans la mémoire seulement si les première et seconde signatures (D_S_1, D_S_2) sont identiques.

9. Système sur puce selon la revendication 8, **caractérisé en ce que** le moyen qui est configuré pour générer une seconde signature de données (D_S_2) comprend :
- un compteur de données ;
- une unité de masquage de données (D_M) pour combiner les données (D) pour la mise à jour et une sortie du compteur de données (D_C) ;
- une fonction de combinaison de bits (B_C) pour combiner une sortie de l'unité de masquage de données (D_M) et une adresse des données (D) pour la mise à jour ;
- un module cryptographique (C_M) qui fournit une fonction cryptographique (C_F) pour crypter une sortie de la fonction de combinaison de bits (B_C) ; et
- un module de hachage (H_M) qui fournit une fonction de hachage (H_F) pour hacher une sortie cryptée de la fonction de combinaison de bits (B_C).

10. Système sur puce selon la revendication 8 ou 9, **caractérisé en ce que** le moyen qui est configuré pour générer une seconde signature de données (D_S_2) comprend un module cryptographique (C_M) qui est configuré pour crypter la sortie de l'unité de masquage de données (D_M) à l'aide de l'unique clé de dispositif dudit système sur puce, le moyen comprenant en outre un régénérateur de clé (K_R) et un dispositif de PUF (PUF) pour reconstruire la clé de cryptage.
